# EUROPEAN PATENT APPLICATION

(11) **EP 4 678 389 A1**
(43) Date of publication of application: **14.01.2026**
(21) Application number: 25183290.3
(22) Date of filing: 17.06.2025
(51) Int. Cl.: B32B 5/02, B32B 7/12

(54) **FLAME-RETARDANT MATERIAL**

(30) Priority: 12.07.2024 GB 202410223
(71) Applicant: Camira Fabrics Limited, Mirfield West Yorkshire WF14 8HE (GB)
(72) Inventor: SUTCLIFFE, Colin Anthony, Mirfield, West Yorkshire, WF14 8HE (GB); BRADSHAW, Lucy Janine, Mirfield, West Yorkshire, WF14 8HE (GB)
(74) Representative: Haseltine Lake Kempner LLP

(57) **Abstract**

The invention provides a flame-retardant composite material comprising a backing layer with a flame-retardant substance printed thereon and a face layer, the face layer and backing layer joined together such that the flame-retardant substance is positioned in between the face layer and the backing layer. The flame-retardant substance is printed onto the backing layer in a pattern comprising shapes separated by channels and provides an obstacle to flame progression in at least one direction. Compared to known methods of providing fabrics with flame-retardant properties, an enhanced flame retardancy performance may be observed whilst reducing the amount of flame-retardant substance that is required for the same area of fabric.

## Description

### Field of invention

The invention relates to flame-retardant composite materials and methods of rendering materials fire-resistant.

### Background

Materials such as textiles, especially textiles for certain uses such as furniture, transport and public spaces, are required by regulation in certain countries to meet fire resistance standards. A known method of rendering a textile fire-resistant is "back coating". Back coating involves applying a layer of flame retardant on the back of a fabric, i.e. the side of the fabric that will not be visible in normal use. This is effective in providing fire resistance, but the amount of flame retardant applied to meet certain fire resistance standards can change the handle of a textile. Additionally, the flame retardant can bleed through to the front of the fabric when back coating is used, which is undesirable for the appearance of the textile, and can also have an adverse affect on the handle of the fabric. There is also a desire to use less flame retardancy, both for environmental reasons and to reduce costs. However, it is a challenge to do this and still meet the fire resistance standards.

There is a desire to produce a fabric that addresses at least one of the problems mentioned above.

### Summary

In a first aspect, the invention provides a flame-retardant material composite comprising a face layer and a backing layer; wherein the backing layer comprises a substrate with a flame-retardant substance printed thereon; wherein the backing layer has a weight per square meter, without the flame-retardant substance printed thereon, less than the weight per square meter of the face layer; wherein the face layer and the backing layer are joined together such that the flame-retardant substance is positioned in between the face layer and the backing layer; wherein the flame-retardant substance is printed in a pattern, the pattern comprising printed shapes separated by channels, the channels having a lower coat weight of flame-retardant substance than the printed shapes; and wherein the printed shapes provide an obstacle to flame progression in at least one direction.

In a second aspect, the invention provides a flame-retardant backing layer comprising a substrate with a flame-retardant substance printed thereon; wherein the flame-retardant substance is printed in a pattern comprising shapes separated by channels, the channels having a lower coat weight of the flame-retardant substance than the shapes; and wherein the printed shapes provide an obstacle to flame progression in at least one direction.

In a third aspect, the invention provides a method of making a flame-retardant material composite comprising a face layer and a backing layer, the method comprising: providing a flame-retardant backing layer according to the second aspect; and joining the flame-retardant backing layer to a face layer, such that the flame-retardant substance is positioned in between the face layer and the backing layer.

Compared to known methods of giving flame-retardant properties to materials, the products and method of the invention may provide excellent fabric handle, drape, flexibility and breathability without compromising fire-retardancy performance, whilst decreasing the amount of flame-retardant substance that is required, and without seep-through to the user side of the material. The modular approach may also reduce waste by ensuring that only materials that actually require a flame-retardant finish have this treatment applied, compared to when an entire batch of face layer material is back-coated with a flame-retardant substance. In addition, the modular approach may enable a wider choice of materials that have the required flame-retardancy performance, since the risk of FR substance seeping through to the user side is reduced or even eliminated compared to backcoating.

### Brief description of drawings

Figure 1A shows a printing pattern according to an embodiments of the backing layer as described here, with Figure 1B showing a portion of the pattern enlarged, highlighting the convex (Cᵥ) and concave (C_{c}) portions of one of the shapes.
Figures 2 and 3 are photographs, respectively, of a flame retardancy test and an example of the composite fabric after the flame retardancy test;
Figures 4A to 4G show various embodiments of the composite material with different layering arrangements.

In the Figures, the reference numerals refer to the following:
1. Flame-retardant composite material
2. Backing layer
3. Flame-retardant substance (which has been printed on the backing layer)
4. Face layer
5. Adhesive layer
6. Waterproof barrier film

### Detailed description

Optional and preferred features of the composite material, the backing layer and their method of manufacture are described below. Any optional or preferred feature described below is applicable to any aspect described herein and combinable with any other optional or preferred feature unless indicated otherwise.

### Abbreviations and definitions

gsm = grams per square metre
FR = flame-retardant

### Print pattern

The flame-retardant substance is printed onto the substrate of the backing layer in a pattern comprising printed shapes separated by channels. "Shapes" refers to the 2D shapes as viewed at a 90 degree angle from the plane of the printed pattern and backing layer on which it is printed (i.e. when viewed from above the printed pattern). The printed shapes provide an obstacle to flame progression in at least one direction in the plane of the backing layer and the channels have a lower coat weight of flame-retardant substance compared to the coat weight of flame-retardant substance of the printed shapes. In some embodiments, the channels may be free or substantially free of a flame-retardant substance.

The printed shapes may be lines, e.g. tortuous lines, that extend along the fabric. The lines may be zig-zag or wavy lines. The lines may, in the composite fabric, extend along a warp or a weft direction (or a machine direction or a cross direction) of the face layer.

The printed shapes may be discrete shapes. Discrete shapes form a discontinuous print pattern in which the printed shapes are not connected to one another, in other words forming islands of the flame-retardant substance on the backing layer, surrounded by the channels, in which less flame-retardant substance (in gsm) is printed compared to the shapes or preferably in which no flame-retardant substance (in gsm) is printed. The discontinuous nature of the print pattern may facilitate a better fabric handle, so that the drape of the flame-retardant material composite is closer to the drape of the face layer alone than if the flame-retardant substance was printed continuously or substantially continuously in a whole, unbroken layer or in stripes.

In a preferred embodiment, the shapes are discrete shapes, i.e. forming islands of flame retardant substance, surrounded by the channels and are in an array of shapes that extend in two orthogonal directions in the plane of the backing layer (which in the composite fabric having a woven face layer may be in a warp and weft direction). The array may be a randomly arranged array of shapes in the two orthogonal directions or may form a repeating pattern in one or both of the two orthogonal directions.

The shapes may be regular shapes, e.g. selected from circles or n-sided regular shapes, where n can be any number of 3 or more, such as a triangular, rectangular, square, heptagonal and hexagonal. In a regular shape, all angles are convex, i.e. all interior angles are either acute or obtuse (and less than 180 °).

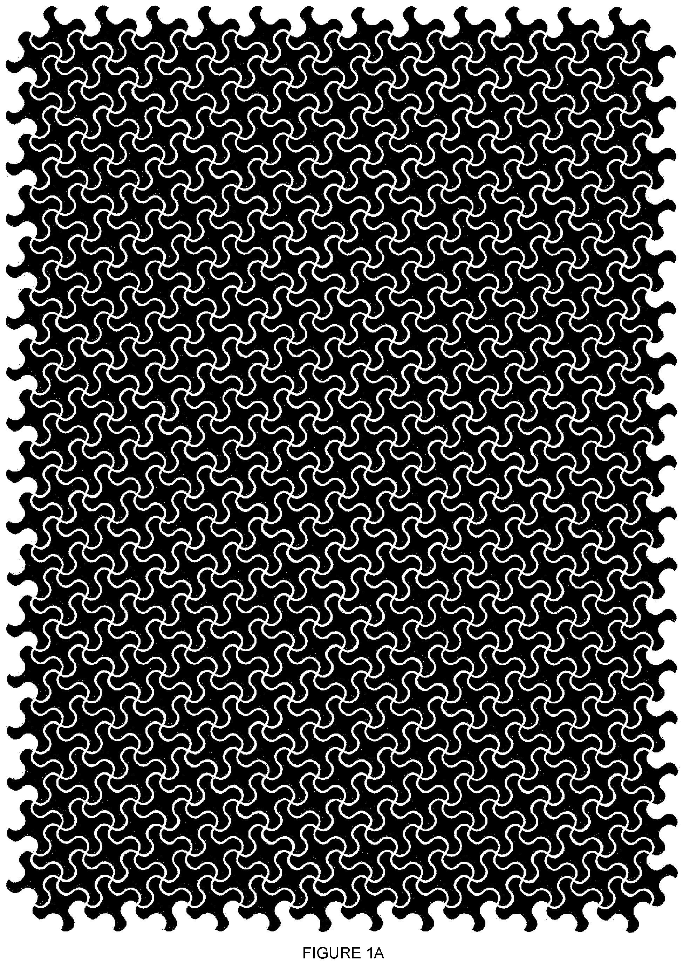

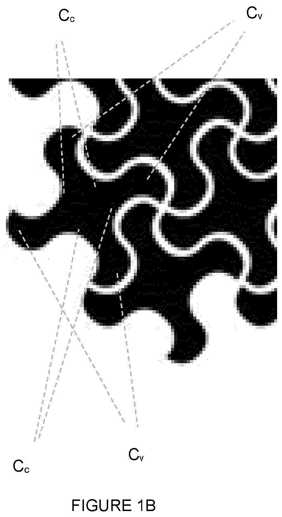

In a preferred embodiment, the shapes are non-regular shapes, preferably a concave non-regular shape - a concave non-regular shape has at least one internal angle that is greater than 180 °. The shapes are preferably non-regular shapes with 180 ° or 90 ° or 60 ° rotational symmetry, preferably concave, non-regular shapes with 180 ° or 90 ° or 60 ° rotational symmetry. The shapes may have at least one concave portion and at least one convex portion, and optionally may have 180 ° or 90 ° or 60 ° rotational symmetry. It should be noted that the concave portion and convex portion is in reference to the 2D shape and its outline (from the perspective of outside of the shape) when the shape is viewed at an angle 90 degrees from the plane of the printed pattern and backing layer (i.e. from above the printed pattern), and 'convex' and 'concave' does not indicate a projection above or below the plane of the printed pattern. Convex portions of a shape of the pattern in Figure 1A are marked in Figure 1B with Cᵥ and concave portions of a shape of the pattern in Figure 1A are marked in Figure 1B with C_{c}. In the shapes in Figures 1A and 1B, the convex and concave portions are formed by a curved portion of the perimeter. In alternative embodiments, the concave and convex portions may be defined by straight lines, or a mixture of straight and curved lines. Preferably the convex portion in a shape corresponds in size and shape to the concave portion in an adjacent shape. In an embodiment, each shape has four convex portions, and four concave portions, and 90 ° rotational symmetry, and the convex portions correspond in size and shape to the concave portions. This allows the shapes to be provided in an interlocking array in a pattern that repeats in two orthogonal directions.

The printed shapes may be interlocking. By "interlocking", it means that, within the two-dimensional plane of the backing layer, the print pattern comprises shapes that interlock with adjacent shapes. In an interlocking shape, a shape having a convex portion may extend into a convex portion of an adjacent shape. An example of an interlocking pattern is shown in Figures 1A and 1B. As seen in Figure 1B, each shape has four convex portions Cᵥ and four concave portions C_{c}, with each convex portion of one shape being adjacent to and projecting into a concave portion of the adjacent shape, and each shape has 90 ° rotational symmetry. By making interlocking shapes, which may include features such as wavy edges, the presence of printed flame-retardant substance may be less noticeable when handling the fabric compared to, for example, straight-edged shapes which may tend to form obvious creases in the flame-retardant material composite.

The printed shapes may be tessellating. Tessellating patterns may facilitate a predictable flame extinguishing time for the material, due to forming channels of substantially consistent width.

The printed shapes may form a repeating pattern of discrete shapes, with the pattern repeating in at least one direction on the backing layer, optionally in two orthogonal directions in the backing layer. When the backing layer or composite material is cut, a repeating pattern may facilitate that the cut point has no influence on the fabric handle or flame extinguishing performance of the fabric.

The printed shapes may provide an obstacle to flame progression in at least two directions in the plane of the backing layer. In the composite material, when the face layer is woven, these two directions preferably correspond to the warp and weft directions of the face layer. For face layer materials that are not woven fabrics, "warp and weft directions" can be taken to mean "machine and transverse directions", e.g. referring to materials that are industrially processed in rolls, for example nonwoven fabrics or vinyl films. The two directions may be substantially orthogonal within the plane of the backing layer.

The printed pattern of the flame-retardant substance may have 90° rotational symmetry. A backing layer or composite material having 90° rotational symmetry for the printed pattern of the flame-retardant substance may have the same or similar performance in flame extinguishing tests in both warp and weft (or machine and transverse) directions.

The channels may form a tortuous pathway in the at least one direction, or in each of the at least two directions, in which the printed shapes provide an obstacle to flame progression. A tortuous pathway may be a pathway that repeatedly changes direction along its length. Since the channels have a lower coat weight of flame-retardant substance than the printed shapes, it is preferred to avoid straight lines along which a flame could more easily travel. A tortuous pathway for the low- or no-FR channels makes flame progression across the material difficult.

The channels may have a width of from 0.5 to 5 mm, such as from 0.5 to 3 mm, such as from 1 to 2 mm. The printed shapes may have a largest dimension within the plane of the backing layer of from 3 to 50 mm, such as from 3 to 30 mm, such as from 5 to 25 mm. Preferably, the channels are narrower than the smallest dimension of the printed shapes within the plane of the backing layer. In principle the largest dimension of the printed shapes within the plane of the backing layer is not restricted, but smaller printed shapes may improve the handle and increase the drape of the composite material, by increasing the ability of the material to bend compared to larger printed shapes or continuously printed flame-retardant substance.

The pattern (including the printed shapes and the channels) may have a flame-retardant substance coat weight of from 10 g/m² to 200 g/m²., optionally from 30 g/m² to 200 g/m², optionally from 30 g/m² to 150 g/m², optionally from 30 g/m² to 120 g/m², optionally from 30 g/m² to 120 g/m², optionally from 40 g/m² to 100 g/m², optionally from 50 g/m² to 90 g/m², optionally from 60 g/m² to 80 g/m², optionally about 70 g/m². Preferably the channels represent areas that do not receive the flame-retardant substance during a printing process, to enhance the drape properties of the composite material. However, a coat weight for the channel that is lower than the coat weight of the printed shapes (e.g. the channels having a coat weight 50 % or lower, optionally at least 20 % or lower, optionally 10 % or lower of the coat weight of the printed shapes) will provide some flexibility to the composite material, compared to continuously printed flame-retardant substance. The coat weight of the flame-retardant substance in the pattern in, gsm, may be equal to or greater than the gsm weight of the substrate of the backing layer. The coat weight of the flame-retardant substance in the pattern in, gsm, may be equal to or less than the gsm weight of the substrate of backing layer.

### Flame-retardant substance

The flame-retardant substance comprises a flame-retardant compound or composition (also referred to herein as "FR active ingredient"). The flame-retardant substance may consist of one or more flame-retardant compounds or compositions. Alternatively, the flame-retardant substance comprises, in addition to an active flame-retardant compound or composition, additional components to facilitate printing onto a fabric. Various types of printing onto fabric and suitable ink compositions and viscosities are known in the art and may be implemented or adapted for the flame-retardant substance of the present invention.

Any FR active ingredient suitable for use with fabrics may be used. A combination of two or more different types of FR active ingredients may be used in the flame-retardant substance. For example, phosphorous-based compounds, aluminium trihydroxide, magnesium hydroxide, antimony trioxide, zinc borate, low melting glasses, halogenated compounds, phosphate compounds, silicone based compounds, ceramic beads, melamine salts, intumescent additives, boron-containing compounds, nitrogen compounds such as ammonium salts or acids, molybdenum compounds, aluminium compounds, silicon compounds, antimony compounds, carbonizing agents, dehydrating agents, aluminium hydroxides, radical scavengers such as bromine compounds or antimony/halogen compounds, and other known FR active ingredients may be used.

A preferred class of FR active ingredients is those based on phosphorous. Phosphorus-based flame retardants are known to act synergistically with cellulose fibres. Suitable phosphorus-based FRs include triphenyl phosphate, resorcinol-bis(diphenylphosphate), bisphenol-A diphenyl phosphate, diphenylcresylphosphate, melamine polyphosphate, diethylphosphinic acid, and tricresylphosphate.

Preferably the flame-retardant substance comprises a phosphorous-based flame retardant, such as a halogen-free red phosphorous flame retardant. Phosphorous-based FR active ingredients are especially preferred in combination with cellulosic backing layer materials such as viscose.

In some embodiments, the flame-retardant substance comprises microencapsulated halogen-free red phosphorous. Microencapsulation may reduce or eliminate odours generated by the phosphorous-based flame retardant during use of the fabric. The flame-retardant substance may be a 5 to 20 wt. % microencapsulated halogen-free red phosphorous, such as a 5 to 15 wt. % microencapsulated halogen-free red phosphorous or about 10 wt. % microencapsulated halogen-free red phosphorous; wt% in this context refers to the amount of encapsulant material in the microencapsulated phosphorous, so 10wt% microencapsulated halogen-free red phosphorous indicates that the encapsulant material is present in 10 wt%, with the remaining 90wt% being the halogen-free red phosphorous.

### Backing layer

As part of the flame-retardant composite material, the backing layer has a lower weight per square meter than the face layer, not including the weight of the flame-retardant substance. The backing layer, including the printed flame-retardant substance, may have a lower weight per square meter than the face layer. The substrate of the backing layer, alone or as part of the composite, receives the flame-retardant substance in a printed pattern.

An aim of the invention is to achieve flame-retardancy of a face layer (face fabric) without significantly altering the fabric handle (drape, creasing, ease of use in upholstering, etc.). Therefore it is desirable that the substrate of the backing layer has a low fabric weight. The substrate of the backing layer (i.e. not including the printed flame-retardant substance) may have a weight of from 10 to 200 g/m², such as from 10 to 160 g/m², optionally 20 to 160 g/m², optionally 20 to 120 g/m², optionally 20 to 100 g/m², optionally 20 to 80 g/m², optionally 20 to 60 g/m², optionally 30 to 50 g/m², optionally about 40 g/m².

The substrate of the backing layer may comprise a fibrous material, e.g. a fabric, a paper or any suitable material. Preferably the substrate of the backing layer comprises a fabric. Suitable fabrics include textile (fibre-based) fabrics, including woven, nonwoven and knit fabrics. Glass fibre fabrics such as a nonwoven glass fibre web may be used for their inherent fire resistance in addition to the flame-retardant substance to be printed. Cellulosic fabrics such as nonwoven viscose scrim may be particularly suited to use with phosphorous-based fire retardants and are also known to be flexible.

The use of a separate layer to receive the flame-retardant composition has numerous benefits for the finished flame-retardant composite material. The printed backing layer may be produced in large quantities and subsequently laminated with a variety of different face layer materials. This simplifies the process of rendering a material as flame-retardant to meet regulatory requirements, for example by reducing the minimum order quantity for a customer and reducing the time taken to provide the face layer with the required flame retardancy. Known methods of back coating a fabric to provide flame retardant properties use a large amount of flame-retardant composition which is costly to the consumer and also costly to the environment. Modern environmental regulations are providing a driver to reduce unnecessary use of chemicals such as flame retardants to reduce the impact on the environment of achieving the necessary safety standards for fabrics. Known methods of back coating also come with the risk of the flame-retardant chemicals seeping through to the front of the fabric, so that it may be visible from the front and also vulnerable to wearing away through use of the fabric. These drawbacks of known methods are alleviated by the use of a backing layer to receive the flame-retardant composition and subsequent lamination with a face layer, i.e. the material that the consumer will see in normal use.

### Face layer

The face layer is typically visible to the consumer in normal use of the composite material, for example as upholstery. In some embodiments, the face layer comprises a textile fabric, natural leather, faux leather, or alternative materials capable of forming a layer, such as natural or composite cork.

Preferably the face layer comprises a textile fabric (i.e. a material made from fibres), such as a woven, knit or nonwoven fabric, more preferably a woven fabric. Any suitable type of fabric weave can be implemented for the face layer, such as plain, twill, satin, basket, jacquard, gauze, herringbone, crepe, dobby, or other weave types.

The face layer may itself be a composite fabric, such as a faux leather having a PU or vinyl leather-appearance side and a backing layer such as a woven or knit cotton, polyester, or other backing layer, or a quilted fabric including a wadding layer stitched to the consumer-facing fabric.

The face layer may be a medium-weight or heavy-weight fabric. The face layer may be a fabric suitable for use in upholstery, transport, healthcare, public spaces, education, theatre, curtains, interior design or other heavy-duty settings, or acoustic applications.

Suitable textile fabrics may comprise synthetic fibres, natural fibres, or a combination of synthetic and natural fibres.

Synthetic fibres may include polymeric fibres such as polyamides, polyesters, polyalkylenes, high-performance aramid fibres, and others. Preferred polymeric fibre types are polyamides, polyesters, and polypropylenes. Polymeric fibres may be made from virgin feedstock, recycled feedstock, or a mixture of virgin and recycled feedstock. Recycled feedstock may come from within the textile manufacturing process, or post-consumer waste. Synthetic fibres may include inorganic fibres, such as mineral wool, glass fibres, carbon fibres and others. A blend of two or more types of synthetic fibres may be used for the face layer, optionally in combination with one or more natural fibres.

Natural fibres include animal-derived fibres such as wool and silk, and plant derived fibres such as cellulose, flax, hemp, cotton, jute, coir, and others. Cellulose fibres can be processed or unprocessed. Processed cellulose fibres may be made into viscose fabric, or blended with other fibre types. Natural fibres may be virgin fibres or recycled fibres or a blend thereof. Recycled natural fibres may come from within the textile manufacturing process, or processed from post-consumer waste. Natural fibres such as wool may be used as a nonwoven face layer, for example as a felted fabric.

In a preferred embodiment, the face layer comprises a woven textile comprising synthetic fibres.

The face layer may have a weight of from 50 to 1000 g/m², such as from 70 to 900 g/m², such as from 90 to 900 g/m², optionally from 200 to 700 g/m², optionally from 200 to 700 g/m², optionally 300 to 600 g/m² The face layer may comprise a faux leather fabric or continuous polymeric layer, e.g. a vinyl layer, having a weight of from 550 to 900 g/m². The face layer may comprise a woven, nonwoven or knit textile fabric having a weight of from 150 to 800 g/m². In a preferred embodiment, the face layer may comprise a woven textile fabric comprising synthetic fibres and having a weight of from 200 to 600 g/m², optionally 300 to 600 g/m² optionally 400 to 600 g/m², optionally about 500 g/m².

The face layer may be reversible, or it may have a front side (visible in normal use) and a reverse side. In the latter case, the backing layer is joined to the reverse side of the face layer, such that the printed flame-retardant substance faces toward the reverse side of the face layer.

### Composite material

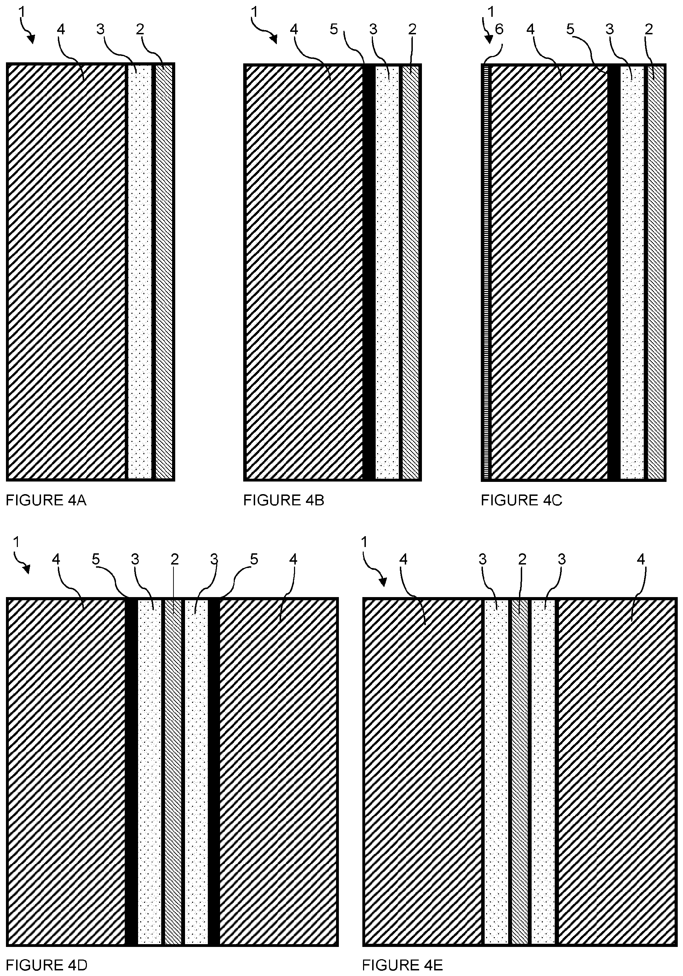

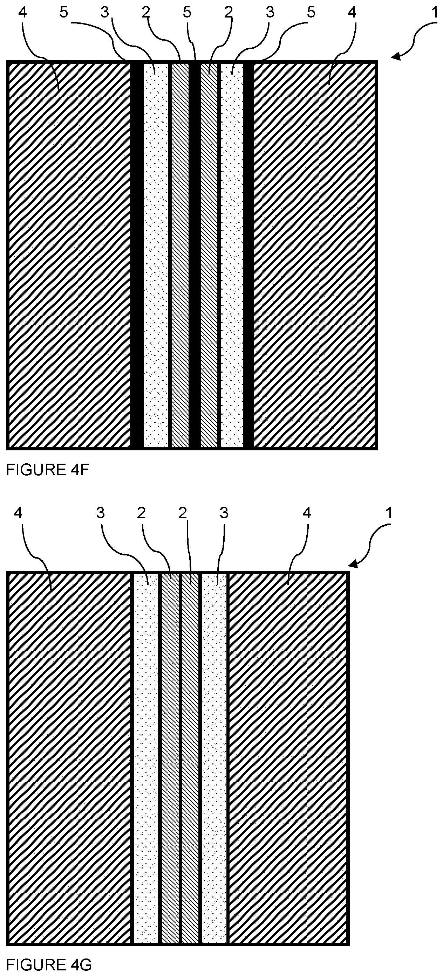

As a minimum, the flame-retardant composite material of the invention comprises a face layer, a backing layer and a flame-retardant substance printed onto the backing layer as defined in the first aspect of the invention. Examples of the composite fabric and the relative arrangement of its components are shown in Figure 4A, in which the joining means are not shown.

The backing layer and the face layer may be joined together by any suitable means, including a combination of means. The backing layer and the face layer may be joined together (a) by mechanical means; (b) by chemical adhesive means; or (c) by a combination of mechanical means and chemical adhesive means; preferably (b) or (c), more preferably (b). Mechanical means include known joining methods such as stitching and needle punching. Chemical adhesive means include various known methods of using binder to adhere two layers together. Binder may be applied uniformly to one or both of the backing layer and face layer and the two layers then joined together by the binder. Binder may be applied sparingly or in a pattern to reduce the amount of binder used, which may be environmentally beneficial and at the same time reduce the impact of the binder on the flame retardancy of the composite material. An adhesive layer 5 is shown in Figures 4B, C, D and F.

The face layer may be provided with a water-resistant coating on the consumer-facing side of the material, for example for application in healthcare settings. Optional water-resistant layer 6 is shown in Figure 4C. This is shown on an exposed face of the face layer; in preferred embodiments (not shown), the waterproof barrier film 6 may instead be disposed between the face layer 4 and the flame-retardant substance 3, and an adhesive layer 5 may be disposed on one or both sides of the waterproof barrier film 6; in another embodiment the waterproof barrier film 6 may alternatively be disposed on the opposite side of the backing layer 2 from the flame-retardant substance 3.

Various, non-exhaustive arrangements of the composite material components are illustrated in Figures 4A to 4G. As mentioned above, the reference numerals in the Figures refer to the following:
1. Flame-retardant composite material
2. Backing layer
3. Flame-retardant substance (which has been printed on the backing layer)
4. Face layer
5. Adhesive layer
6. Waterproof barrier film

Single-sided composite materials 1 are shown in Figures 4A, 4B and 4C. Figure 4B illustrates the location of the optional adhesive layer 5 . The layers may also be bonded together by any other suitable means, including, but not limited to, mechanical means such as stitching and riveting. In some embodiments, the Flame-retardant substance itself may act as an adhesive. For some applications (such as curtains, acoustic fabrics and wall hangings), a double-sided flame-retardant composite fabric 1 may be provided.

Figure 4D shows an arrangement in which a face layer 4 is provided on the front and back of the material. Backing layer 2 is provided with printed flame-retardant substance 3 on both its sides. The backing layer and two face layers are optionally secured together with binder 5. A similar two-sided arrangement is shown in Figure 4E without any binder. In Figures 4F (with binder 5) and 4G (joining means unspecified), a double-sided flame-retardant composite material is illustrated in which two single-sided backing layers 2 are provided and joined together plain-sides facing each other. Each of these two backing layers 2 is provided with a printed flame-retardant substance 3 on the side facing the face layer 4. These four layers are joined together, optionally with binder 5, to form a double-sided flame-retardant composite material.

In a preferred embodiment, the face layer comprises a woven textile, the substrate of the backing layer comprises a viscose scrim, the FR substance comprises halogen-free red phosphorous and the face layer and backing layer are joined by an adhesive.

### Method of manufacture

In the method of the invention, the backing layer and the face layer are provided separately. This enables economies of scale for the FR backing layer, which may be implemented in a FR composite material with a variety of different face layer materials.

The FR substance is printed onto a substrate of the backing layer. In some embodiments, the backing layer is printed on both sides of the substrate. In a preferred method, the FR substance is applied to the substrate of the backing layer by screen printing, which may be rotary or flat bed screen printing.

Suitable adhesive lamination methods for joining the face layer and the backing layer having the flame-retardant substance printed thereion include, but are not limited to, hot melt lamination, granular thermoplastic adhesive, web adhesive or film adhesive. Holt melt lamination is a known industrial process that involves use of a hot-melt adhesive, such as EVA, PE or PUR (polyurethane reactive), to form a strong bond between layers. A granular, web or film adhesive may be applied to one or both of the backing layer and the face layer and then the two layers may be laminated by pressure and/or heat.

In summary, the method according to the invention significantly reduces process risk to the valuable face layer, minimises processing losses and waste and allows much lower process minimums to be commercially achieved than an existing conventional FR back coating process. It allows any quantity (including small quantities) of the composite fabric to be produced, since any size of existing face layer (or fabric) can be combined with the backing layer. It avoids what would typically be required in an industrial fabric setting where FR is applied to the back of a face fabric - in that instance, typically a large amount of fabric (e.g. a whole industrial roll) of fabric would have the FR applied to its rear surface.

The present disclosure also provides flame-retardant material composites and backing layers, and a method of making a flame-retardant material composite, as set out the following numbered statements:
1. A flame-retardant material composite comprising a face layer and a backing layer;
   wherein the backing layer comprises a substrate with a flame-retardant substance printed thereon;
   wherein the backing layer has a weight per square meter, without the flame-retardant substance printed thereon, less than the weight per square meter of the face layer;
   wherein the face layer and the backing layer are joined together such that the flame-retardant substance is positioned in between the face layer and the backing layer;
   wherein the flame-retardant substance is printed in a pattern, the pattern comprising printed shapes separated by channels, the channels having a lower coat weight of flame-retardant substance than the printed shapes; and
   wherein the printed shapes provide an obstacle to flame progression in at least one direction.
2. The flame-retardant material composite of statement 1, wherein the printed shapes are discrete.
3. The flame-retardant material composite of statement 1 or statement 2, wherein the printed shapes are interlocking.
4. The flame-retardant material composite of any preceding statement, wherein the printed shapes are tessellating.
5. The flame-retardant material composite of any preceding statement, wherein the printed shapes form a repeating pattern of discrete shapes.
6. The flame-retardant material composite of any preceding statement, wherein the printed shapes provide an obstacle to flame progression in at least two directions.
7. The flame-retardant material composite of statement 6, wherein the two directions correspond to warp and weft directions of the face layer, if woven, or otherwise to machine and cross directions for the face layer.
8. The flame-retardant material composite of statement 6 or statement 7, wherein the two directions are substantially orthogonal within the plane of the backing layer.
9. The flame-retardant material composite of any preceding statement, wherein the pattern has 90 degree rotational symmetry.
10. The flame-retardant material composite of any preceding statement, wherein the channels form a tortuous pathway in the at least one direction, or in each of the at least two directions of any one of statements 6 to 8.
11. The flame-retardant material composite of any preceding statement, wherein the channels have a width of from 0.5 to 5 mm, such as from 0.5 to 3 mm, such as from 1 to 2 mm.
12. The flame-retardant material composite of any preceding statement, wherein the printed shapes have a largest dimension within the plane of the back layer of from 3 to 50 mm, such as from 3 to 30 mm, such as from 5 to 25 mm.
13. The flame-retardant material composite of any preceding statement, wherein the pattern (including the printed shapes and the channels) has a flame-retardant substance coat weight of from 10 g/m² to 200 g/m².
14. The flame-retardant material composite of any preceding statement, wherein the pattern (including the printed shapes and the channels) has a flame-retardant substance coat weight of from 40 g/m² to 100 g/m².
15. The flame-retardant material composite of any preceding statement, wherein the face layer comprises a textile fabric, leather, or faux leather, preferably wherein the face layer comprises a textile fabric.
16. The flame-retardant material composite of any preceding statement, wherein the face layer comprises a synthetic woven fabric.
17. The flame-retardant material composite of any preceding statement, wherein the face layer has a weight of from 50 to 1000 g/m², optionally 90 to 900 g/m².
18. The flame-retardant material composite of any preceding statement, wherein the backing layer comprises fibrous layer, optionally selected from a textile fabric and a paper.
19. The flame-retardant material composite of any preceding statement, wherein the backing layer comprises a nonwoven textile fabric, such as a nonwoven viscose scrim.
20. The flame-retardant material composite of any preceding statement, wherein the backing layer has a weight of from 10 to 200 g/m², such as from 20 to 160 g/m², optionally from 20 to 60 g/m²
21. The flame-retardant material composite of any preceding statement, wherein the flame-retardant substance comprises a phosphorous-based flame retardant, such as a halogen-free red phosphorous flame retardant.
22. The flame-retardant material composite of any preceding statement, wherein the flame-retardant substance comprises microencapsulated halogen-free red phosphorous.
23. The flame-retardant material of any preceding statement, wherein the flame-retardant substance is a 5 to 20 wt. % microencapsulated halogen-free red phosphorous.
24. The flame-retardant material of any preceding statement, wherein the backing layer and the face layer are joined together (a) by mechanical means; (b) by chemical adhesive means; or (c) by a combination of mechanical means and chemical adhesive means; preferably (b) or (c), more preferably (b).
25. A flame-retardant backing layer comprising a substrate with a flame-retardant substance printed thereon;
   wherein the flame-retardant substance is printed in a pattern comprising shapes separated by channels, the channels having a lower coat weight of the flame-retardant substance than the shapes, and optionally no flame-retardant substance is printed in the channels; and
   wherein the printed shapes provide an obstacle to flame progression in at least one direction.
26. A method of making a flame-retardant material composite comprising a face layer and a backing layer, the method comprising:
   providing a flame-retardant backing layer according to statement 25;
   joining the flame-retardant backing layer to a face layer, such that the flame-retardant substance is positioned in between the face layer and the backing layer.

### Examples

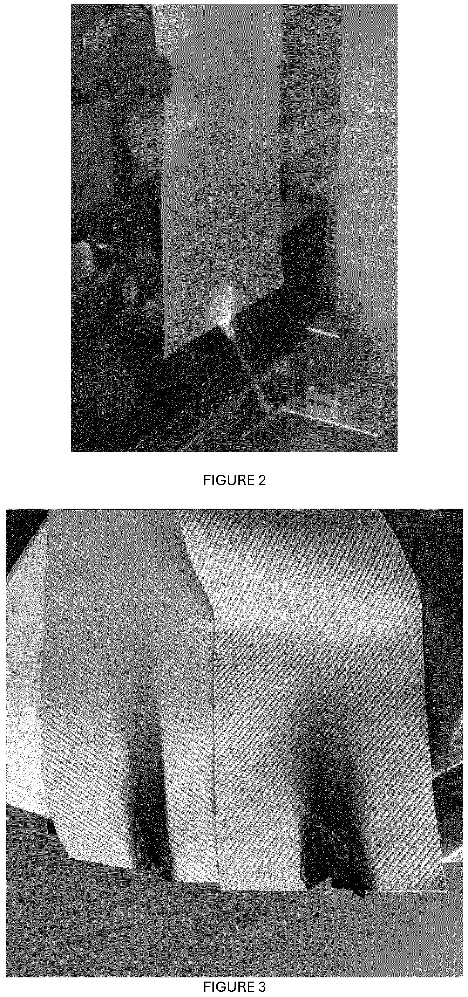

In the Examples below, a composite fabric was made and then tested for fire retardancy according to both Domestic 'Cigarette and Match' testing and BS7176 Medium Hazard Contract FR testing and additionally in challenging Reg 118.3 Annex 8 vertical edge burn testing for commercial mass transport applications (Figures 2 and 3).

### Production of composite fabric

A spunlace nonwoven viscose scrim of approximately 40gsm weight was used as the backing layer. A pattern of flame-retardant substance (FR) was printed on the backing layer in a pattern as shown in Figure 1A, using rotary or flat bed screen printing. The FR was more specifically halogen free red phosphorous based FR with extensive microencapsulation of the red phosphorous FR element in the order of 10% of the weight of the FR system (i.e. the encapsulant constitutes 10wt% of the FR and the halogen free red phosphorous constitutes 90wt% of the FR). The FR was printed on the dark areas (forming the shapes) and no FR was printed in the channels between the shapes. The amount of FR applied across the whole printed pattern was 70 gsm. This is about 50% less FR than would normally be applied to the back of a face layer to achieve the same fire resistance (the minimum applied on the back of a face layer is typically 100 gsm, but often 200 gsm or more)- as shown below, this amount, with the patterning and the construction of the fabric nevertheless allows the fabric to pass certain fire retardant standards.

The backing layer was laminated to a face fabric layer, with the FR pattern facing the face fabric. The face fabric was a woven upholstery textile of 497 gsm, formed from polyester yarns.

### Testing of composite fabric

This composite fabric was tested to demonstrate its efficacy as an FR barrier in both Domestic 'Cigarette and Match' testing and BS7176 Medium Hazard Contract FR testing and additionally in challenging Reg 118.3 Annex 8 vertical edge burn testing for commercial mass transport applications. It was tested in both the warp and weft direction and passed in both directions. An illustration of the flame test is shown in the photograph of Figure 2. The fabric after the test is shown in Figure 3 - as can been seen the flame did not progress very far along the fabric.

Two alternative versions of the print were also produced on the different samples of the same backing layer - a continuous unbroken layer and a hexagonal pattern. While the composite fabric having the backing layer with the continuous unbroken layer was able to pass flame retardancy tests, its handle was found to be stiffened considerably. An alternative printed pattern of hexagonal shapes was also printed on the backing layer - the composite fabric made using this backing layer had improved handle, and passed flame retardancy in one direction, but was found to have a lower than desired flame retardancy when rotated by 90 °.

## Claims

1. A flame-retardant material composite comprising a face layer and a backing layer;
wherein the backing layer comprises a substrate with a flame-retardant substance printed thereon;
wherein the backing layer has a weight per square meter, without the flame-retardant substance printed thereon, less than the weight per square meter of the face layer;
wherein the face layer and the backing layer are joined together such that the flame-retardant substance is positioned in between the face layer and the backing layer;
wherein the flame-retardant substance is printed in a pattern, the pattern comprising printed shapes separated by channels, the channels having a lower coat weight of flame-retardant substance than the printed shapes; and
wherein the printed shapes provide an obstacle to flame progression in at least one direction.

2. The flame-retardant material composite of claim 1, wherein the printed shapes are interlocking, and/or wherein the printed shapes are tessellating, optionally tessellating, non-regular shapes, optionally wherein the printed shapes are discrete, wherein the printed shapes form a repeating pattern of discrete shapes.

3. The flame-retardant material composite of claim 1 or claim 2, wherein the printed shapes provide an obstacle to flame progression in at least two directions, optionally wherein the two directions correspond to warp and weft directions of the face layer, if woven, or otherwise to machine and cross directions for the face layer, and/or wherein the two directions are substantially orthogonal within the plane of the backing layer.

4. The flame-retardant material composite of any preceding claim, wherein the pattern has 90 degree rotational symmetry.

5. The flame-retardant material composite of any preceding claim, wherein the channels form a tortuous pathway in the at least one direction, or in each of the at least two directions of claim 3.

6. The flame-retardant material composite of any preceding claim, wherein the channels have a width of from 0.5 to 5 mm, such as from 0.5 to 3 mm, such as from 1 to 2 mm, and/or wherein the printed shapes have a largest dimension within the plane of the back layer of from 3 to 50 mm, such as from 3 to 30 mm, such as from 5 to 25 mm.

7. The flame-retardant material composite of any preceding claim, wherein the pattern (including the printed shapes and the channels) has a flame-retardant substance coat weight of from 10 g/m² to 200 g/m², and/or wherein the pattern (including the printed shapes and the channels) has a flame-retardant substance coat weight of from 40 g/m² to 100 g/m².

8. The flame-retardant material composite of any preceding claim, wherein the face layer comprises a textile fabric, leather, or faux leather, preferably wherein the face layer comprises a textile fabric, and/or wherein the face layer comprises a synthetic woven fabric.

9. The flame-retardant material composite of any preceding claim, wherein the face layer has a weight of from 50 to 1000 g/m², optionally 90 to 900 g/m².

10. The flame-retardant material composite of any preceding claim, wherein the backing layer comprises fibrous layer, optionally selected from a textile fabric and a paper, and/or wherein the backing layer comprises a nonwoven textile fabric, such as a nonwoven viscose scrim.

11. The flame-retardant material composite of any preceding claim, wherein the backing layer has a weight of from 10 to 200 g/m², such as from 20 to 160 g/m², optionally from 20 to 60 g/m²

12. The flame-retardant material composite of any preceding claim, wherein the flame-retardant substance comprises a phosphorous-based flame retardant, such as a halogen-free red phosphorous flame retardant, optionally wherein the flame-retardant substance comprises microencapsulated halogen-free red phosphorous, optionally wherein the flame-retardant substance is a 5 to 20 wt. % microencapsulated halogen-free red phosphorous.

13. The flame-retardant material composite of any preceding claim, wherein the backing layer and the face layer are joined together (a) by mechanical means; (b) by chemical adhesive means; or (c) by a combination of mechanical means and chemical adhesive means; preferably (b) or (c), more preferably (b).

14. A flame-retardant backing layer comprising a substrate with a flame-retardant substance printed thereon;
wherein the flame-retardant substance is printed in a pattern comprising shapes separated by channels, the channels having a lower coat weight of the flame-retardant substance than the shapes, and optionally no flame-retardant substance is printed in the channels; and
wherein the printed shapes provide an obstacle to flame progression in at least one direction.

15. A method of making a flame-retardant material composite comprising a face layer and a backing layer, the method comprising:
providing a flame-retardant backing layer according to claim 14;
joining the flame-retardant backing layer to a face layer, such that the flame-retardant substance is positioned in between the face layer and the backing layer.
